# NEUE EUROPÄISCHE PATENTSCHRIFT

(11) **EP 3 015 311 B2**
(45) Veröffentlichungstag und Bekanntmachung des Hinweises auf die Entscheidung über den Einspruch: **19.06.2024**
(45) Hinweis auf die Patenterteilung: 17.01.2018
(21) Anmeldenummer: 14190720.4
(22) Anmeldetag: 28.10.2014
(51) Int. Cl.: B60P 7/08, B60J 5/06

(54) **Nutzfahrzeugaufbau und Verfahren zum Sichern der Lage eines Transportguts auf einer Ladefläche eines Nutzfahrzeugs**
Commercial vehicle structure and method for securing the position of an item transported on a transport platform of a commercial vehicle
Montage d'un véhicule utilitaire et procédé de sécurisation de la position de marchandise de transport sur une surface de chargement d'un véhicule utilitaire

(43) Veröffentlichungstag der Anmeldung: 04.05.2016
(73) Patentinhaber: Schmitz Cargobull AG, 48341 Altenberge (DE)
(72) Erfinder: Derks, Roger Geradus Christiaan, 5922 XT Venlo (NL)
(74) Vertreter: Cohausz & Florack

(56) Entgegenhaltungen:
- EP-A1- 2 353 904
- EP-A1- 2 586 658
- EP-A1- 2 708 393
- GB-A- 2 457 128
- US-A1- 2013 034 401

## Beschreibung

Die Erfindung betrifft ein Verfahren zum Sichern der Lage eines Transportguts auf einer Ladefläche eines Nutzfahrzeugs.

Beispiele für mit Nutzfahrzeugaufbauten der in Rede stehenden Art ausgestattete Nutzfahrzeuge sind Sattelauflieger für Sattelzüge, selbstfahrende Lastkraftwagen und Anhänger für solche Lastkraftwagen.

Die über der Ladefläche des jeweiligen Nutzfahrzeugs errichteten Nutzfahrzeugaufbauten der hier in Rede stehenden Art sind typischerweise quaderförmig langgestreckt ausgebildet und weisen eine Länge auf, die deutlich größer ist als ihre Breite. Dabei umfassen solche Nutzfahrzeugaufbauten üblicherweise Seitenwände, die die Längsseiten des Aufbaus bilden, eine Stirnwand, die bei normaler Vorwärtsfahrt die den Nutzfahrzeugaufbau an seinem vorderen Ende abschließende Seitenwand bildet, und eine Rückwand, die am bei Vorwärtsfahrt hinteren Ende des Nutzfahrzeugs angeordnet ist.

Bei Nutzfahrzeugaufbauten mit festen Längsseitenwänden ist in der als Rückwand dienenden Seitenwand des Aufbaus üblicherweise eine ein- oder doppeflügelige Türe vorgesehen, über die die Beladung des von dem Nutzfahrzeugaufbau umgrenzten Laderaums erfolgen kann. Bei Nutzfahrzeugaufbauten des so genannten "Curtain-Sider"-Typs, bei denen insbesondere die Längsseitenwände durch eine Plane gebildet sind, erfolgt die Beladung des Laderaums dagegen in der Regel über eine oder beide Längsseiten der Ladefläche. Dazu kann die jeweilige Plane aus einer geschlossenen Position, in der sie die jeweilige Längsseite vollständig bedeckt, in eine geöffnete Position bewegt werden, in der eine Ladeöffnung freigegeben ist.

Bei modernen als Planenaufbauten ausgebildeten Nutzfahrzeugaufbauten sind zu diesem Zweck die jeweils aus Planenmaterial bestehenden Seitenwände in Führungen verschiebbar geführt. Zur Verstärkung können an der jeweiligen Seitenwand so genannte "Schieberungen" vorgesehen sein, die gemeinsam mit der Plane oder unabhängig davon aus einer Gebrauchsstellung, in der sie den Nutzfahrzeugaufbau aussteifen, in eine Öffnungsstellung verschoben werden können, in der sie einer Beladung des Laderaums nicht im Wege stehen.

Während des Transports ist das auf der Ladefläche abgesetzte Transportgut hohen dynamischen Kräften ausgesetzt. Diese treten nicht nur beim Beschleunigen und Abbremsen, sondern insbesondere auch bei Kurvenfahrten des Nutzfahrzeugs auf. Daher ist es erforderlich, das Transportgut durch besondere Sicherungsmaßnahmen auf der Ladefläche zu fixieren. Bei bekannten Nutzfahrzeugaufbauten werden zu diesem Zweck insbesondere in den den Längsseiten des Aufbaus zugeordneten Seitenwänden Anschlagpunkte ausgebildet. In diese können Spannmittel, wie beispielsweise ein Spanngurt oder desgleichen, mit ihren Enden eingekoppelt werden, um dann in geeigneter Weise um das Transportgut so gelegt und verspannt zu werden, dass das Transportgut in seiner Lage fixiert ist. Bei Nutzfahrzeugaufbauten mit festen Seitenwänden sind die betreffenden Anschlagpunkte dazu in die jeweilige Seitenwand eingelassen.
Bei Aufbauten, deren Längsseitenwände durch Planen gebildet und durch Rungen verstärkt sind, können dagegen so genannte Einstecklatten vorgesehen sein, die in den zwischen benachbarten Rungen vorhandenen Zwischenräumen angeordnet und in an den Rungen ausgebildete Aufnahmen gesteckt werden, so dass sie an den Rungen gehalten und abgestützt sind. In die Einstecklatten können als Anschlagpunkte dienende Öffnungen eingeformt sein, in die das jeweilige Spannmittel mittels eines geeigneten Anschlagmittels eingekoppelt werden kann. Ein Nutzfahrzeugaufbau gemäß dem Oberbegriff des Anspruchs 1 ist aus US 2013/0034401 A1 bekannt. Einen Überblick über den Stand der Technik im Bereich der Ladungssicherung gibt der Katalog "03 Ladungssicherung", Ausgabe 2014, der von der SpanSet GmbH & Co. KG, 52531 Übach-Palenberg, veröffentlicht worden ist.

Vor dem Hintergrund des Standes der Technik hat sich die Aufgabe gestellt, bei einem Nutzfahrzeugaufbau eine in der Handhabung vereinfachte Möglichkeit der Sicherung der Lage von Transportgut zu schaffen.

Ebenso sollte ein Verfahren angegeben werden, das es auf einfache Weise erlaubt, die Lage eines Transportguts im Laderaum eines Nutzfahrzeugs zu sichern.

In Bezug auf das Verfahren besteht die erfindungsgemäße Lösung der oben genannten Aufgabe darin, dass beim Verstauen von Transportgut mindestens die in Anspruch 1 angegebenen Schritte absolviert werden.

Ein Nutzfahrzeugaufbau ist wie beim voranstehend erläuterten Stand der Technik über einer Ladefläche des Nutzfahrzeugs errichtet und umfasst Seitenwände, die einen zur Aufnahme eines Transportguts dienenden Laderaum des Nutzfahrzeugs umgrenzen. Dabei ist an der dem Laderaum zugeordneten Seitenfläche mindestens einer der Seitenwände ein Anschlagpunkt angeordnet, der zum Anschlagen eines Transportsicherungselements bestimmt ist, das zum Sichern der Lage Transportguts im Laderaum vorgesehenen ist.

Der Anschlagpunkt ist an einem in seiner Längsrichtung zugbelastbaren, biegeschlaffen und sich in Längsrichtung der zugeordneten Seitenfläche und mit Abstand zu der Ladefläche erstreckenden Zurrmittel ausgebildet, das in seiner Längsrichtung lose verschiebbar an der Seitenwand geführt und mit seinem einen Ende an dem Aufbau fixiert ist, während sein anderes Ende relativ zur zugeordneten Seitenfläche lose beweglich ist.

Es wird davon ausgegangen, dass sich eine besonders einfache Handhabung und gleichzeitig optimierte Wirkung bei der Lagesicherung von Transportgut dadurch ergibt, dass das den Anschlagpunkt tragende Zurrmittel nur an seinem einen Ende an dem Ladungsaufbau festgelegt ist, wogegen sein anderes Ende lose ist. Da gleichzeitig das Zurrmittel mit dem Anschlagpunkt lose an der zugeordneten Seitenwandfläche geführt ist, kann es in seiner Längsrichtung relativ zur betreffenden Seitenfläche verschoben werden.

Dies ermöglicht zum einen eine besonders einfache Handhabung, da das Zurrmittel an der Stelle, an der der jeweilige Anschlagpunkt ausgebildet ist, leicht gegriffen werden kann, um das zum Verspannen des Transportguts jeweils eingesetzte Spannmittel mit ihm zu verkoppeln. Zum anderen lässt sich das Zurrmittel mit dem Anschlagpunkt auf einfache Weise an der jeweiligen Seitenwand montieren.

Die lose Anordnung des mit dem Anschlagpunkt ausgestatten Zurrmittels an der zugeordneten Seitenwand erweist sich als besonders vorteilhaft, wenn es sich bei dem Nutzfahrzeugaufbau um einen Planenaufbau handelt. Dadurch, dass erfindungsgemäß das Zurrmittel relativ zur ihm zugeordneten Seitenwand längsverschieblich ist, ist sichergestellt, dass die Plane problemlos und ohne durch das an ihr gehaltene Zurrmittel behindert oder belastet zu werden, aus der geschlossenen in eine Öffnungsstellung und wieder zurück in ihre geschlossene Stellung bewegt werden kann. Im Zuge des Schließens der Plane findet das Zurrmittel dabei selbstständig in seine ordnungsgemäße Lage zurück, ohne dass es aufwändiger oder hohe Bedienkräfte erfordernder Montagearbeiten bedarf. Dies erweist sich insbesondere unter den rauen Bedingungen als besonders vorteilhaft, unter denen in der Praxis innerhalb kurzer Zeitvorgaben die Be- und Entladung von Nutzfahrzeugen erfolgen muss.

Die Erfindung erweist sich dementsprechend als besonders vorteilhaft bei Nutzfahrzeugaufbauten des Curtain-Sider-Typs, bei dem mindestens eine der Längsseiten durch eine mit einem an ihr lose gelagerten Zurrmittel versehene Plane gebildet ist, die aus der geschlossenen Stellung, in der sie die jeweilige Längsseite des Aufbaus abschließt, in eine Öffnungsstellung geschoben werden kann, in der über die dann freie Längsseite die Beladung erfolgen kann.

Für die erfindungsgemäßen Zwecke kann jedes Zurrmittel eingesetzt werden, das in der Lage ist, ausreichend hohe Zugbelastungen aufzunehmen und gleichzeitig in Querrichtung zu seiner Längserstreckung so flexibel, d. h. "biegeschlaff", ist, dass es beispielsweise der Verformung der das Zurrmittel tragenden Seitenwand folgen kann und sich auf einfache Weise in die an der jeweiligen Seitenwandfläche angeordnete Führung einfädeln lässt. Bekannte Zurrmittel, die diese Anforderungen erfüllen, sind beispielsweise Gurte, Seile, Ketten oder Bänder. Jedes dieser Zurrmittel ist geeignet, einen oder mehrere Anschlagpunkte zu tragen und gleichzeitig in erfindungsgemäßer Weise mit seinem einen Ende an dem Nutzfahrzeugaufbau fixiert zu werden.

In bestimmten, beispielsweise sich regelmäßig wiederholenden Anwendungsfällen kann es ausreichen, wenn an geeigneter Stelle ein Anschlagpunkt an dem Zurrmittel eines Nutzfahrzeugs ausgebildet ist.

Eine optimierte Vielseitigkeit der Verwendung ergibt sich jedoch dann, wenn an dem Zurrmittel über dessen Länge verteilt zwei oder mehr Anschlagpunkte ausgebildet sind. Dies erlaubt es, auch für unterschiedlichste Beladungssituationen an dem Zurrmittel den für die jeweilige Ladungssicherungsaufgabe jeweils optimal gelegenen Anschlagpunkt zu finden.

Als Anschlagpunkt kann jede Ausgestaltung verwendet werden, die sich in der Praxis für diesen Zweck bewährt hat und die an einem Zurrmittel der erfindungsgemäß verwendeten Art ausgebildet werden kann. So ist es beispielsweise denkbar, in das Zurrmittel eine Ösenöffnung einzuformen, in die das zum Verspannen des Transportguts vorgesehene Spannmittel bei Gebrauch mittels eines an ihm befestigten Koppelglieds, beispielsweise eines Hakens, angekoppelt werden kann. Auch ist es denkbar, bei Verwendung einer Kette als Zurrmittel die einzelnen Kettenglieder als Anschlagpunkte zu nutzen.

Eine stabilere, höher belastbare und gegebenenfalls auch einfach handhabbare Ausgestaltung kann dadurch erreicht werden, dass der jeweilige Anschlagpunkt durch ein gesondert an dem Zurrmittel befestigtes Anschlagelement gebildet ist. Hierbei kann es sich beispielsweise um ein Koppelglied, wie ein Ösenelement, einen Schäkel oder desgleichen handeln. Indem das jeweilige Koppelelement verschwenkbar an dem Zurrmittel gehalten ist, kann es den Bewegungen folgen, die das mit ihm zum Sichern des Transportguts verkoppelte Spannelement beim Ankopplungsvorgang und beim Verspannen ausführt.

In anderen Anwendungsfällen kann es zweckmäßig sein, das Koppelglied an zwei in Längsrichtung des Zurrmittels gegenüberliegenden Seiten an dem Zurrmittel festzulegen. Auf diese Weise lässt sich eine gleichbleibende Wirkung des jeweiligen Koppelglieds unabhängig von einer bestimmten Ausrichtung des Zurrmittels gewährleisten.

Die in seiner Längsrichtung lose Führung des Zurrmittels an der zugeordneten Seitenwand kann in jeder geeigneten Weise bewerkstelligt werden. Insbesondere dann, wenn die jeweilige Seitenwand als Plane ausgebildet ist, bietet sich hierzu an, zum Führen des Zurrmittels an der zugeordneten Seitenfläche eine Führungseinrichtung anzuordnen. Diese kann beispielsweise aus einem flexiblen Material bestehen. So kann die Führungseinrichtung in Form eines Schlauchelements ausgebildet sein, das an der jeweiligen Seitenfläche beispielsweise durch Verkleben, Vernieten, Vernähen oder in anderer Weise befestigt ist und in das in dem Bereich, in dem jeweils ein Anschlagpunkt an dem in der Führungseinrichtung geführten Zurrelement vorgesehen ist, ein Fenster aufweist, um ein Ankoppeln des jeweils zum Lagesichern des Transportguts vorgesehenen Spannmittels zu ermöglichen. Auch kann die Führungseinrichtung durch zueinander in Längsrichtung der Seitenfläche beabstandete Laschenelemente gebildet sein, die jeweils eine Führungsöffnung begrenzen, durch die das Zurrmittel lose geführt ist. Solche Laschenelemente können selbstverständlich auch an Seitenwänden angeordnet werden, die aus formstabilem Material bestehen.

Für die Fixierung des jeweils fest mit dem Nutzfahrzeugaufbau zu verbindenden Endes des den Anschlagpunkt aufweisenden Zurrmittels kann ein an dem Aufbau vorhandenes festes Element, wie beispielsweise eine Eckrunge oder ein anderes ausreichend stabiles Bauteil der Stirn- oder Rückseitenwand des Aufbaus, genutzt werden. Dort können Befestigungsösen, Schlitze oder desgleichen vorhanden sein, die ein einfaches Ankoppeln eines Endes des Zurrmittels erforderlichenfalls unter Nutzung eines Koppelgliedes ermöglichen. Bei konventionellen Nutzfahrzeugaufbauten, bei denen die Seitenwände durch Planen gebildet sind, können zum Fixieren des jeweiligen Endes eines erfindungsgemäß vorgesehenen Zurrmittels auch die zum Festlegen der Planen an ihrem in Fahrtrichtung vorderen oder hinteren seitlichen Rand in den dort zugeordneten Eckrungen des Aufbaus üblicherweise vorhandenen Befestigungseinrichtungen genutzt werden. Dies hat den Vorteil, dass der Bediener die Befestigung der Plane und des jeweiligen Endes des an ihr geführten und mit dem mindestens einen Anschlagpunkt versehenen Zurrmittels sowie das Spannen der Plane und des Zurrmittels in einem Arbeitsgang erledigen kann.

Eine in dieser Hinsicht besonders praxisgerechte Ausführung eines Nutzfahrzeugaufbaus, bei dem mindestens eine mit dem Zurrmittel versehene Seitenwand durch eine Plane gebildet ist, besteht hier darin, dass für die gleichzeitige Befestigung der Plane an ihrem seitlichen Rand und der Fixierung des diesem Rand der Plane zugeordneten Endes des mit dem mindestens einen Anschlagpunkt versehenen Zurrmittels ein Formstück vorgesehen ist, mit dem im Gebrauch der jeweilige seitliche Randbereich der Plane und das jeweilige Ende des Zurrmittels verkoppelt sind und das formschlüssig in einer Aufnahme gehalten ist, die eine Eckrunge des Nutzfahrzeugaufbaus eingeformt ist. Das Formstück kann dabei in an sich bekannter Weise um seine Längsachse drehbar gelagert sein, so dass die mit ihm verkoppelte Plane durch Drehen des Formstücks in ihrer Längsrichtung gespannt werden kann. Die Ankopplung des Zurrmittels an das Formstück kann hier derart erfolgen, dass es bei einer Drehung des Formstückes ebenfalls um das Formstück gewickelt wird, wobei dies aufgrund des geringen Wickelradius zu keiner wesentlichen Verkürzung der Nutzlänge des Zurrmittels führt. Erforderlichenfalls kann die Gesamtlänge des Zurrmittels auch so bemessen sein, dass auch nach dem zum Spannen der Seitenplane durchgeführten Aufwickeln auf das Formstück stets eine ausreichende Nutzlänge zur Verfügung steht. Alternativ ist es möglich, die Ankopplung des Zurrmittels an das Formstück drehentkoppelt vorzunehmen.

Wo die Fixierung des festzulegenden Endes erfolgt, kann in Abhängigkeit von der jeweiligen Beladungssituation entschieden werden. Dient die Stirnseite des Fahrzeugaufbaus als Anschlag, gegen den das Transportgut gestellt ist, so wird zweckmäßigerweise das zu fixierende Ende des Zurrmittels an einem stirnseitigen Bauteil des Aufbaus angeschlagen. Wird dagegen das Transportgut am rückwärtigen Ende des Laderaums angeordnet, so dass die Rückwand des Nutzfahrzeugaufbaus als Anschlag dient, so wird das zu fixierende Ende des Zurrmittels auch an einem der Rückwand zugeordneten Bauteil des Aufbaus befestigt. Hierzu können die im Bereich der Stirn- und Rückwand eines Fahrzeugaufbaus typischerweise vorhandenen Eckrungen genutzt werden. Eckrungen besitzen in der Regel per se eine für diesen Zweck ausreichende Festigkeit, da sie üblicherweise nicht nur die Last des Dachs und der für die Führung beispielsweise einer Längsseitenplane benötigten Schienenkonstruktion tragen, sondern auch eine ausreichende Formstabilität und Belastbarkeit der jeweiligen Stirn- oder Rückwand gewährleisten müssen.

Um eine möglichst vielfältige Nutzung zu ermöglichen, sollte sich das Zurrmittel mindestens über die Hälfte der Länge der zugeordneten Seitenfläche des Nutzfahrzeugaufbaus erstrecken.

Zweckmäßigerweise ist auch im Bereich des losen Endes des Zurrmittels ein Anschlagpunkt ausgebildet. Dieser kann nicht nur zum Ankoppeln eines zur Lagesicherung des Transportguts vorgesehenen Spannmittels genutzt werden, sondern praktischerweise auch zum lösbaren Ankoppeln eines Spannmittels, das zum Verspannen des den mindestens einen Anschlagpunkt aufweisenden Zurrmittels an dem Nutzfahrzeug anschlagbar und mit dem Zurrmittel verkoppelbar ist. Eine solche Verspannung des mit dem Anschlagpunkts ausgestatteten Zurrmittels kann beispielsweise dann zweckmäßig sein, wenn über das zum Lagesichern eingesetzte Spannmittel Spannkräfte unter einem ungünstigen Winkel in das mit dem Anschlagpunkt versehene Zurrmittel eingeleitet werden. Folge hiervon kann sein, dass die Seitenwand über die für das Zurrmittel vorgesehene Führung übermäßig mit Querkräften und dadurch ausgelöste Verformungen belastet wird. Indem das mit dem oder den Anschlagpunkten versehene Zurrmittel in seiner Längsrichtung mittels eines zusätzlichen Spannmittels verspannt wird, kann diese Gefahr gemindert werden, ohne dass die Vorteile der Erfindung beeinträchtigt werden. Aufgrund dessen, dass das Spannmittel und das Zurrmittel nur lösbar miteinander verkoppelt sind, kann die Verbindung zwischen ihnen auf einfache Weise wieder gelöst werden, wenn der Bedarf nicht mehr gegeben ist. Sämtliche Vorteile, die die Anordnung des mit dem Anschlagpunkt versehene Zurrmittels an der jeweiligen Seitenwandfläche des Nutzfahrzeugaufbaus mit sich bringt, stehen dann sofort wieder zur Verfügung. Den voranstehenden Erläuterungen entsprechend umfasst das erfindungsgemäße Verfahren zum Sichern der Lage eines Transportguts auf der Ladefläche eines Nutzfahrzeugs, das einen über der Ladefläche errichteten Nutzfahrzeugaufbau aufweist, der einen das Transportgut aufnehmenden Laderaum umgrenzt, folgende Arbeitsschritte:
- Anordnen eines mindestens einen Anschlagpunkt aufweisenden, biegeschlaffen und zugbelastbaren Zurrmittels in einer Führung, die an einer dem Laderaum zugeordneten Seitenfläche einer Seitenwand des Nutzfahrzeugaufbaus ausgebildet ist und in der das Zurrmittel in Längsrichtung der Seitenfläche verschiebbar geführt ist;
- Fixieren eines Endes des Zurrmittels an dem Nutzfahrzeugaufbau;
- Anordnen des Transportguts auf der Ladefläche, so dass es an seiner einen Seite an einem im Laderaum vorgesehenen Anschlag anliegt;
- Anschlagen eines Spannmittels an dem mindestens einen Anschlagpunkt des Zurrmittels;
- Ausrichten des Spannmittels an einer zum Anschlag gegenüberliegenden Seite des Transportguts derart, dass beim anschließenden Verspannen des Spannmittels eine Zugkraft auf das Zurrmittel ausgeübt wird, die in Richtung des Anschlags wirkt;
- Verspannen des Spannmittels.

Das zur Lagesicherung des Transportguts vorgesehene Spannmittel wird optimaler Weise so an den jeweiligen Anschlagpunkt des Zurrmittels angekoppelt und in Bezug auf das Zurrmittel und das Transportgut ausgerichtet, dass der zu dem Anschlagpunkt geführte Endabschnitt des Spannmittels mit dem Zurrmittel einen möglichst kleinen Winkel einschließt. Optimaler Weise sind der Endabschnitt des Spannmittels und das Zurrmittel parallel zueinander ausgerichtet. Durch eine Minimierung des Winkels zwischen dem mit dem Zurrmittel verkoppelten Endabschnitt des Spannmittels und dem Zurrmittel lässt sich sicherstellen, dass die vom Spannmittel in das Zurrmittel eingeleiteten Kräfte zum weitaus überwiegenden Teil in Längsrichtung der jeweiligen Seitenwand ausgerichtet sind und die jeweilige Führung des Zurrmittels sowie die die Führung tragende Seitenwand nur durch minimale Querkräfte belastet werden.

Die Ausrichtung des jeweiligen Zurrmittels an der zugeordneten Seitenwand des Nutzfahrzeugaufbaus kann in jeder geeigneten Weise erfolgen. Eine große Vielseitigkeit ergibt sich beispielsweise dann, wenn das Zurrmittel mit Abstand und parallel zur Ladefläche ausgerichtet ist, auf der das Transportgut steht. Abhängig davon, wo das Zurrmittel mit seinem festen Ende angeschlagen werden soll, kann es jedoch auch zweckmäßig sein, beispielsweise einen diagonalen Verlauf des Zurrmittels an der Seitenwand vorzusehen.

Nachfolgend wird die Erfindung anhand einer ein Ausführungsbeispiel darstellenden Zeichnung näher erläutert. Deren Figuren zeigen jeweils schematisch und nicht maßstäblich:
- Fig. 1: ein Nutzfahrzeug in unbeladenem Zustand in perspektivischer Ansicht;
- Fig. 2: das Nutzfahrzeug in beladenem Zustand in perspektivischer Ansicht;
- Fig. 3: eine Seitenwand eines Nutzfahrzeugaufbaus des in den Figuren 1 und 2 gezeigten Nutzfahrzeugs in frontaler Ansicht;
- Fig. 4: eine alternative Ausführung der Seitenwand des Nutzfahrzeugaufbaus des in den Figuren 1 und 2 gezeigten Nutzfahrzeugs in frontaler Ansicht;
- Fig. 5: ein weitere alternative Ausführung der Seitenwand des Nutzfahrzeugaufbaus des in den Figuren 1 und 2 gezeigten Nutzfahrzeugs in frontaler Ansicht;
- Fig. 6: einen Ausschnitt eines mit einem Anschlagpunkt versehenen Zurrmittels in einer Draufsicht;
- Fig. 7: eine Eckrunge des Nutzfahrzeugaufbaus in einem Querschnitt quer zu ihrer Längsachse;
- Fig. 8: die Eckrunge gemäß Fig. 7 in einer seitlichen Draufsicht.

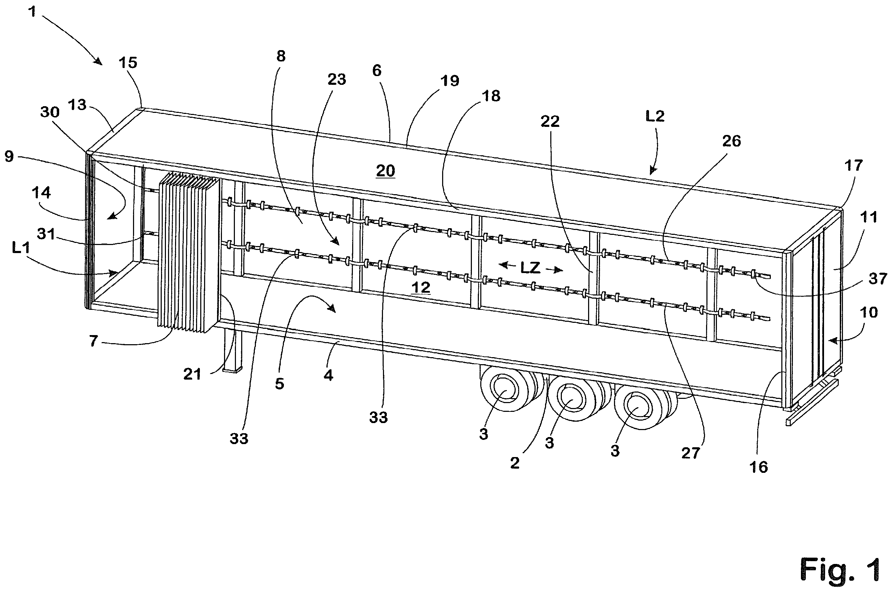

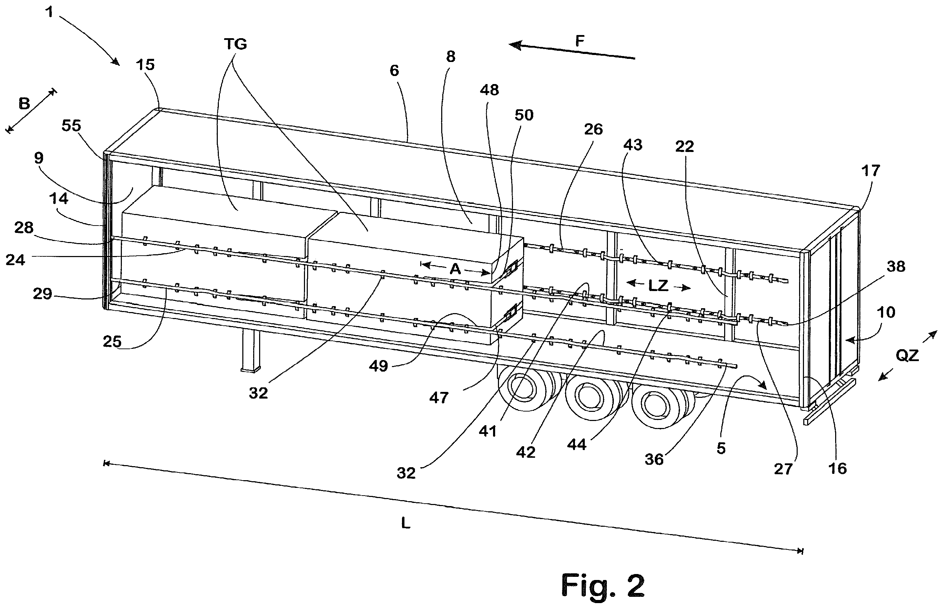

Bei dem in den Figuren 1 und 2 gezeigten Nutzfahrzeug 1 handelt es sich um einen Sattelauflieger für einen Sattelzug, dessen Zugmaschine hier der Übersichtlichkeit halber nicht dargestellt ist.

Das Nutzfahrzeug 1 umfasst ein Chassis 2, an dem drei Radachsen 3 gelagert sind und das einen Boden 4 trägt, an dessen freier Oberseite eine sich über die Länge L und Breite B des Nutzfahrzeugs 1 erstreckende Ladefläche 5 ausgebildet ist.

Über der Ladefläche 5 ist ein quaderförmiger Nutzfahrzeugaufbau 6 errichtet, dessen den Längsseiten des Nutzfahrzeugaufbaus 1 zugeordneten Seitenwände L1,L2 durch Planen 7,8 gebildet ist. Die der nicht gezeigten Zugmaschine zugeordnete geschlossene feste stirnseitige Seitenwand 9 ist dagegen in an sich bekannter Weise aus Leichtmetallbauteilen gebildet. An der rückwärtigen Seitenwand 10 ist in ebenso bekannter Weise eine doppelflügelige Tür 11 vorgesehen, über die eine Beladung des von dem Nutzfahrzeugaufbau 6 umgrenzten Laderaums 12 erfolgen kann.

Der Nutzfahrzeugaufbau 6 umfasst des Weiteren in an sich bekannter Weise einen Rahmen 13, der aus Eckrungen 14,15,16,17, von denen jeweils eine in einem der vier Eckbereiche des Bodens 4 errichtet ist und von denen die beiden vorderen Eckrungen 14,15 die stirnseitige Seitenwand 9 und die rückwärtige Seitenwand 10 von den beiden hinteren Eckrungen 16,17 gestützt sind. Die Eckrungen 14,16 und die Eckrungen 15,17 tragen jeweils gemeinsam ein Längsprofil 18,19, das sich zwischen der stirnseitigen Seitenwand 9 und der rückseitigen Seitenwand 10 erstreckt.

Die Längsprofile 18,19 tragen ein den Laderaum 12 an seiner oberen Seite abdeckendes Dach 20, das hier ebenfalls aus einem Planenwerkstoff besteht. Gleichzeitig bilden die Längsprofile 18,19 in an sich bekannter Weise eine Führung für die Planen 7,8, die die jeweiligen Seitenwände L1,L2 bilden. Entlang der Längsprofile 18,19 können die Planen 7,8 aus einer Stellung, in der die jeweilige Seitenwand L1,L2 vollständig geschlossen ist (in den Figur 1 dargestellt für die Plane 7 der Seitenwand L1), in eine Öffnungsstellung bewegt werden, in der die jeweilige Seitenwand L1,L2 geöffnet ist und am Nutzfahrzeugaufbau 6 eine Öffnung zum Beladen des Laderaums 12 vorhanden ist. Ebenfalls an den Längsprofilen 18,19 verschiebbar gelagert und sich zwischen dem jeweiligen Längsprofil 18,19 und dem Boden 4 erstreckende Schieberungen 21,22 sind bei geschlossener Plane 7,8 in gleichmäßigen Abständen über die Länge L verteilt an der jeweiligen Seitenwand L1,L2 angeordnet. Sie dienen zur Aussteifung des Nutzfahrzeugaufbaus 6 und stützen das ihnen jeweils zugeordnete Längsprofil. Auch die Schieberungen 21,22 können mit der jeweils zugeordneten Plane 7,8 aus den Positionen, die sie bei geschlossener Plane 7,8 einnehmen, in eine Öffnungsstellung bewegt werden, in der sie außerhalb der jeweils von der Plane freigegebenen Beladeöffnung angeordnet sind (Fig. 1).

Beim in Fig. 1 dargestellten Zustand des Nutzfahrzeugaufbaus 6 ist zur Verdeutlichung das aus der zusammengeschobenen Plane 7 und den ebenfalls bei ihr zusammengeschobenen, ihr zugeordneten Schieberungen 21 gebildete Paket mit Abstand zur stirnseitigen Seitenwand 9 angeordnet. In der Praxis würde dieses Paket bis zur Seitenwand 9 geschoben werden, um eine maximal große Beladeöffnung zu erhalten.

Beim in Fig. 2 dargestellten Zustand des Nutzfahrzeugaufbaus 6 ist dagegen ebenfalls zur Verdeutlichung die der Längsseite L1 zugeordnete Plane 7 und die ebenso dort angeordneten Schieberungen 21 weggelassen worden.

An der dem Laderaum 12 zugeordneten Seitenfläche 23 der Planen 7,8 ist jeweils ein Zurrmittel 24,25,26,27 angeordnet. Die Zurrmittel 24-27 erstrecken sich parallel und mit Abstand zueinander und zur Ladefläche 5.

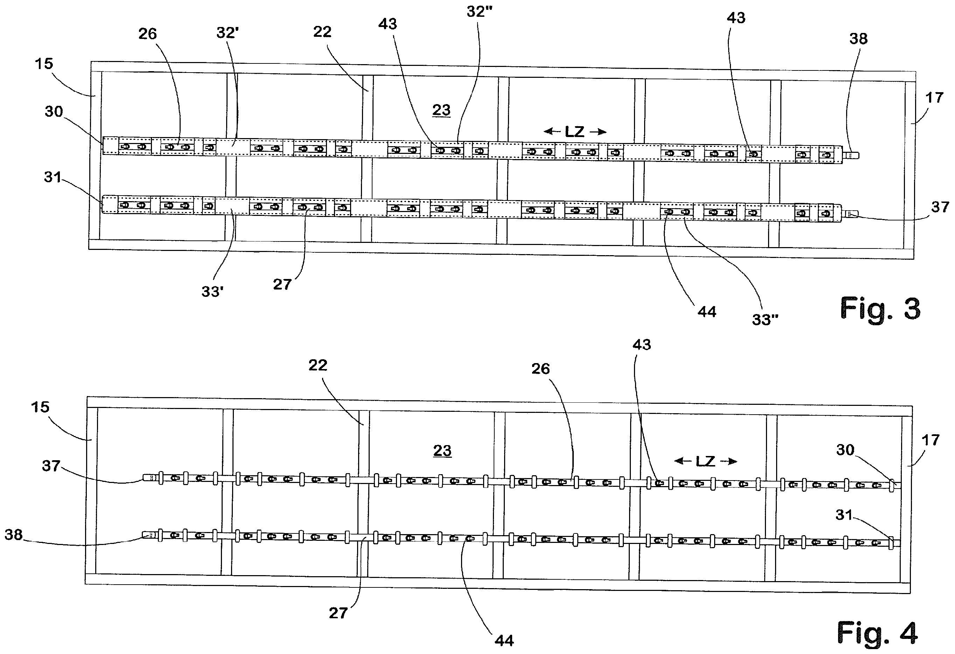

Bei den in den Figuren 1 - 3 und 5 dargestellten Ausgestaltungen sind die Zurrmittel 24,25,26,27 mit ihrem der stirnseitigen Seitenwand 9 zugeordneten Enden 28,29,30,31 an der jeweiligen Eckrunge 14,15 fixiert. Beim Ausführungsbeispiel der Fig. 4 sind die Zurrmittel 24 - 27 dagegen an den der rückwärtigen Seitenwand 10 zugeordneten Eckrungen 16,17 fixiert.

Für die Fixierung der Enden 28-31 der Zurrmittel 24-27 kann in den Eckrungen 14-17 jeweils eine hier nicht sichtbare Aufnahme eingeformt sein, in der das jeweilige Ende des Zurrmittels 24 - 27 durch ein hier ebenfalls nicht gezeigtes Einsatzstück formschlüssig so gehalten ist, dass es unter in seiner Längsrichtung LZ wirkenden Zugbelastung selbsthemmend in der betreffenden Aufnahme gehalten ist.

Die sich über mindestens 80 % der Länge L des Nutzfahrzeugaufbaus 6 erstreckenden Zurrmittel 24-27 sind in ihrer Längsrichtung LZ lose verschiebbar an der die jeweilige Seitenwand L1,L2 bildenden Plane 7,8 gehalten.

Dazu sind bei den in den Figuren 1, 2, 4 und 5 dargestellten Ausführungsbeispielen an der jeweiligen Seitenfläche 23 der Planen 7,8 in bestimmten Abständen über die Länge des Zurrmittels 24-27 verteilt gemeinsam als Führungseinrichtungen dienende Laschenelemente 32,33 befestigt, die gemeinsam mit dem ihnen zugeordneten Abschnitt der jeweiligen Plane 7,8 jeweils eine Führungsöffnung 35 umgrenzen. Durch die Führungsöffnung 35 ist das jeweilige Zurrmittel 24-27 mit Spiel so viel geführt, dass es lose in seiner Längsrichtung LZ in der Führungsöffnung 35 verschoben werden kann.

Beim in Fig. 3 dargestellten Ausführungsbeispiel sind dagegen als Führungseinrichtungen sich in Längsrichtung der jeweiligen Plane erstreckende Schläuche 32',33' an der jeweiligen Seitenfläche 23 befestigt, in denen die Zurrmittel 24-27 längsverschieblich geführt sind. In die Schläuche 32',33' sind hier in den Bereichen, in denen die vom jeweiligen Zurrmittel 24-27 getragenen Anschlagpunkte 41-44 angeordnet sind, Fenster 32",32" eingeschnitten, über die die Anschlagpunkte 41-44 zugänglich sind.

Mit ihren freien Enden 36,37 hängen die Zurrmittel 24-27 lose über die letzte der Laschenelemente 32,33 hinaus, so dass eine freie Relativbeweglichkeit der Zurrmittel 24-27 in ihrer Längsrichtung LZ entlang der jeweiligen Plane 7,8 gewährleistet ist.

An den freien Enden 36,37 der Zurrmittel 24-27 ist jeweils Anschlagpunkt 38 in Form einer Schlaufe gebildet. In diesen Anschlagpunkt 38 kann ein Koppelglied 39 eingehängt werden, um ein zusätzliches Spannmittel 40 lösbar mit dem betreffenden Ende 36,37 des jeweiligen Zurrmittels 24-27 zu verbinden.

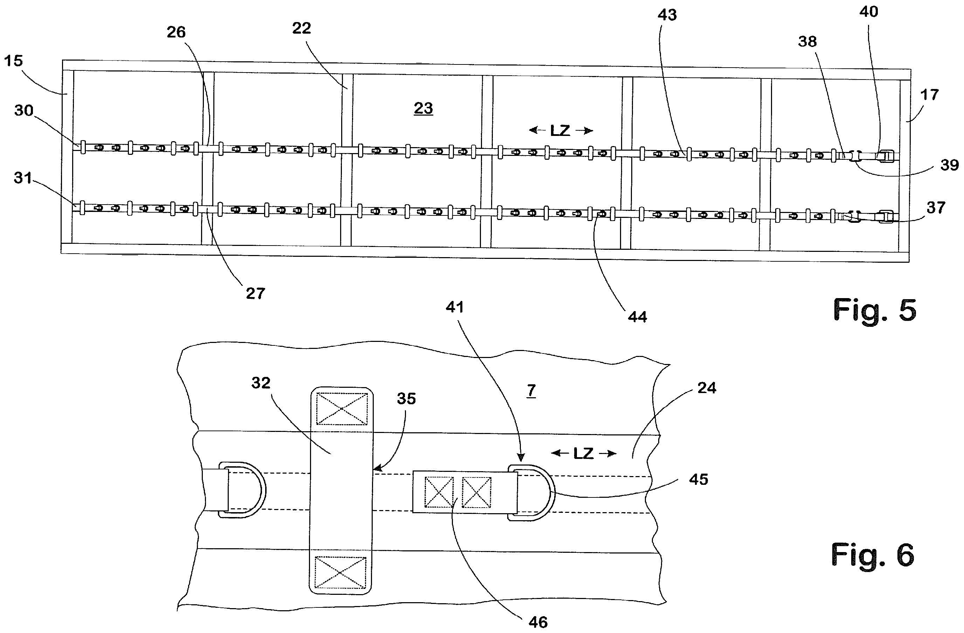

Das mit einer konventionellen Spannratsche versehene zusätzliche Spannmittels 40 ist an der zum fixierten Ende 28-31 der Zurrmittel 24-27 gegenüberliegend angeordneten Eckrunge 16,17 angeschlagen. Mittels des zusätzlichen Spannmittels 40 kann auf diese Weise das jeweilige Zurrmittel 24-27 zwischen den Eckrungen 14,16 an der Seitenwand L1 und zwischen den Eckrungen 15,17 an der Seitenwand L2 verspannt werden. Unabhängig davon bleiben die jeweilige Plane 7,8 aufgrund der losen Verbindung zwischen ihnen und den Zurrmitteln 24-27 verschiebbar. Die Verspannung des Zurrmittels 24-27 kann zweckmäßig sein, wenn ein Transportgut TG sowohl entgegen als auch in Fahrtrichtung F gegen ein Verrutschen gesichert werden soll (Fig. 5). Zum Öffnen der jeweiligen Plane 7,8 kann das Spannmittel 40 problemlos gelöst und die Verbindung mit dem jeweiligen Zurrmittel 24-27 entkoppelt werden.

Selbstverständlich ist es ebenso denkbar, das Spannmittel 40 direkt, d. h. ohne Zwischenschaltung des Koppelglieds 39, mit dem zugeordneten Zurrmittel 24-27 zu verkoppeln oder als zusätzliches Spannmittel nur eine Spannratsche zu verwenden, die lösbar an das jeweilige Zurrmittel 24-27 angekoppelt und an einem geeigneten Gegenlager des Nutzfahrzeugaufbaus 6 angeschlagen wird.

Die Zurrmittel 24-27 bestehen aus konventionellem Gurtmaterial, wie es typischerweise zum Verzurren oder Heben von schweren Lasten eingesetzt wird. Dementsprechend können die Zurrmittel 24-27 in ihrer Längsrichtung LZ hohe Zugbelastungen aufnehmen, sind aber in quer zur Längsrichtung LZ und normal zu der Seitenfläche 23 ausgerichteter Querrichtung QZ flexibel, so dass sie im ungespannten Zustand, nur lose an der jeweiligen Plane 7,8 geführten Zustand in dieser Richtung allenfalls minimale Kraftbelastungen aufnehmen können.

An den Zurrmitteln 24-27 sind beabstandet zueinander eine Vielzahl Anschlagpunkten 41,42,43,44 in Form von beispielsweise als konventionelle Zurrösen oder desgleichen ausgebildeten Koppelgliedern 45 befestigt. Die Koppelglieder 45 sind dazu mittels einem mit dem jeweiligen Zurrmittel 24-27 vernähten Laschenelement 46 verschwenkbar an dem Zurrmittel 24-27 gehalten.

Zur Sicherung der Lage eines Transportguts TG auf der Ladefläche 5 wird das Transportgut TG beispielsweise bis zur stirnseitigen Seitenwand 9 geschoben. Die Seitenwand 9 bildet auf diese Weise einen Anschlag, durch den eine Bewegung des Transportguts TG beispielsweise in Folge der Trägheitskräfte, die bei einer Bremsung wirken, verhindert wird.

Um das Transportgut TG auch gegen ein Verrutschen auf der Ladefläche 5 zu sichern, das durch die beim Anfahren auftretenden, entgegen der Fahrtrichtung F wirkenden Trägheitskräfte ausgelöst wird, wird beispielsweise ein ebenfalls mit einer konventionellen Spannratsche ausgerüstetes, als Transportsicherungselement dienendes Spannmittel 47 mittels eines an ihm befestigten Hakens mit einem der Anschlagpunkte 41 des der Plane 7 zugeordneten unteren Zurrmittels 25 verkoppelt. Dabei wird ein betreffender Anschlagpunkt 41 ausgewählt, der in einem Abstand A zu der Kante 48 angeordnet ist, um die der zu dem betreffenden Anschlagpunkt 41 führende Endabschnitt 49 des Spannmittels 47 geführt ist. Der Abstand A ist dabei so groß, dass der Endabschnitt 49 unter einem spitzen, optimaler Weise minimal kleinen Winkel auf den Anschlagpunkt 41 zuläuft. Ein optimales Spannergebnis wird erreicht, wenn der Endabschnitt 49 dabei annähernd parallel zum Zurrmittel 25 verläuft.

Anschließend wird das andere Ende des Spannmittels 47 ebenfalls mittels eines an ihm befestigten Hakens mit einem in gleicher Weise bestimmten Anschlagpunkt 44 des unteren der der Plane 8 zugeordneten Zurrmittel 27 verkoppelt. Daraufhin wird das Spannmittel 47 verspannt. Die dabei auftretenden Zugkräfte werden über die Zurrmittel 25,27 abgeleitet und von den Eckrungen 14,15 aufgenommen.

In gleicher Weise wird ein ebenfalls als Transportsicherungselement dienendes zweites Spannmittel 50 oberhalb des ersten Spannmittels 47 um das Transportgut TG gelegt und mit den beiden oberen Zurrmitteln 24,26 verspannt.

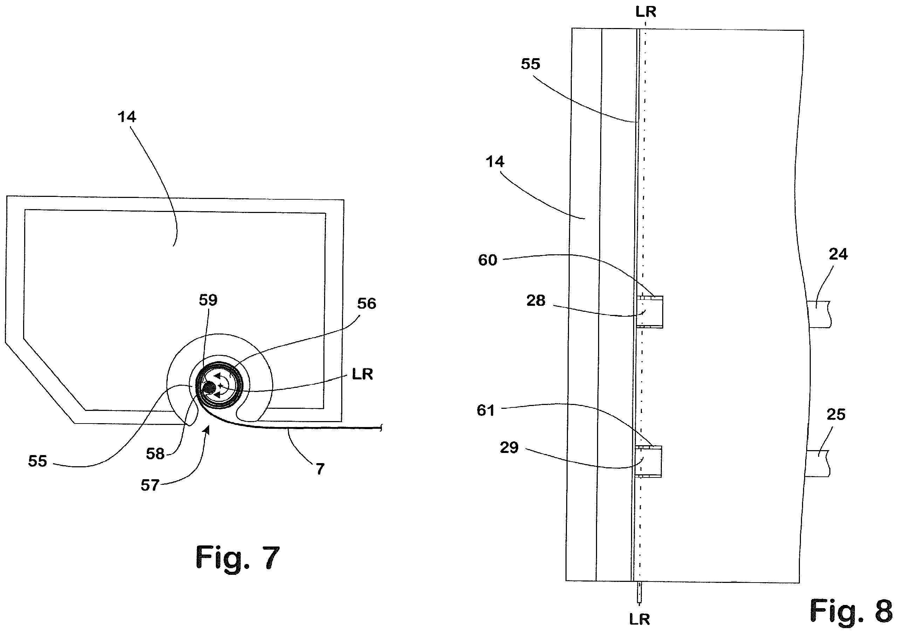

In den Figuren 7 und 8 ist ein Beispiel für die Fixierung der Enden 28-31 der Zurrmittel 24-27 an den vorderen Eckrungen 14,15 des Nutzfahrzeugaufbaus 6 dargestellt. Hier ist an den Eckrungen 14,15 eine schlitzförmige, sich über die Höhe der an der Eckrunge 14,15 jeweils angeschlagenen Plane 7,8 erstreckende Aufnahme 55 eingeformt, die einen kreisförmigen Querschnitt aufweist. In der Aufnahme 55 sitzt ein Rohr 56, das mittels eines geeigneten Kurbelantriebs manuell um seine Längsachse LR drehbar in der Aufnahme 55 gelagert ist. Dabei ist der Durchmesser des Rohres 56 größer als die Weite der Schlitzöffnung 57 der Aufnahme 55.

Durch die Schlitzöffnung 57 ist der der jeweiligen Eckrunge 14,15 zugeordnete seitliche Rand der Seitenplante 7,8 geführt. An dem seitlichen Rand ist eine sich über die Höhe der Plane 7,8 erstreckende Verdickung in Form eines so genannten Keders 58 ausgebildet. Dieser Keder 58 sitzt formschlüssig in einer korrespondieren geformten Aufnahme 59, die in das Rohr 56 geformt ist. Durch Drehen des Rohres 56 um seine Längsachse LR lässt sich die Plane 7,8 zum Spannen auf das Rohr 56 aufwickeln.

Spanneinrichtungen dieser Art sind aus der Praxis in verschiedenen Ausführungen bekannt, wobei die zur Aufnahme des Rohrs 56 vorgesehene Aufnahme 55 auch an einem separaten Profil ausgebildet sein kann, das wiederum an dem Nutzfahrzeugaufbau 6 befestigt ist. Beispiele für derartige Planenspanneinrichtungen und ihre Details sind in der DE 10 2006 044 208 B3 und der WO 2005/037603 A1 beschrieben, deren Inhalte zur Vervollständigung der Offenbarung hiermit in die vorliegende Anmeldung einbezogen werden.

In den der jeweiligen Eckrunge 14,15 zugeordneten Randbereich der jeweiligen Plane 7,8 sind beabstandet zueinander jeweils Ausschnitte 60,61 eingeschnitten, durch die die zugeordneten Enden 28-31 der an der jeweiligen Plane 7,8 geführten Zurrmittel geführt sind. Die Zurrmittel weisen dabei an ihren Enden 28-31 hier nicht gezeigte Keder-Verdickungen auf, die wie der Keder 58 der Seitenplane 7,8, im Bereich der Ausschnitte 60,61 in der Aufnahme 59 des Rohrs 56 sitzen. Gemeinsam mit der jeweiligen Plane 7,8 sind auf diese Weise die Enden 28-31 der jeweiligen Zurrmittel 24-27 an dem in der Aufnahme 55 sitzenden Rohr 56 fixiert.

### BEZUGSZEICHEN

- 1: Nutzfahrzeug
- 2: Chassis
- 3: Radachsen
- 4: Boden
- 5: Ladefläche
- 6: Nutzfahrzeugaufbau
- 7, 8: Planen
- 9: stirnseitige Seitenwand des Nutzfahrzeugaufbaus 6 (Anschlag)
- 10: rückwärtige Seitenwand des Nutzfahrzeugaufbaus 6
- 11: Tür
- 12: Laderaum
- 13: Rahmen des Nutzfahrzeugaufbaus 6
- 14, 15: der Seitenwand 9 zugeordnete vordere Eckrungen
- 16, 17: der Seitenwand 10 zugeordnete hintere Eckrungen
- 18, 19: Längsprofile
- 20: Dach des Nutzfahrzeugaufbaus 6
- 21, 22: Schieberungen
- 23: jeweilige Seitenfläche der Planen 7,8
- 24-27: Zurrmittel
- 28-31: fixierte Enden der Zurrmittel 24-27
- 32, 33: Laschenelemente
- 32', 33': Schläuche
- 32", 33": Fenster
- 35: Führungsöffnung
- 36, 37: freie Enden der Zurrmittel 24-27
- 38: Anschlagpunkt (Schlaufe) am jeweiligen freien Ende 36,37 der Zurrmittel 24-27
- 39: Koppelglied
- 40: zusätzliches Spannmittel
- 41-44: Anschlagpunkte
- 45: Koppelglieder
- 46: Lasche
- 47, 50: Spannmittel
- 48: Kante des Transportguts TG
- 49: Endabschnitt des Spannmittels 45
- 55: schlitzförmige Aufnahme an den Eckrungen 14,15
- 56: Rohr
- 57: Schlitzöffnung
- 58: Keder der jeweiligen Seitenplane 7,8
- 59: Aufnahme des Rohres 56
- 60, 61: Ausschnitte der jeweiligen Plane 7,8
- A: Abstand
- B: Breite des Nutzfahrzeugs 1 (Querrichtung)
- F: Fahrtrichtung
- L: Länge des Nutzfahrzeugs 1 (Längsrichtung)
- L1, L2: den Längsseiten des Nutzfahrzeugs 1 zugeordnete Seitenwände des Nutzfahrzeugaufbaus 6
- LR: Längsachse des Rohres 56
- LZ: Längsrichtung der Zurrmittel 24-27
- QZ: quer zur Längsrichtung LZ ausgerichtete Querrichtung
- TG: Transportgut

## Patentansprüche

1. Verfahren zum Sichern der Lage eines Transportguts (TG) auf einer Ladefläche (5) eines Nutzfahrzeugs (1), das einen über der Ladefläche (5) errichteten Nutzfahrzeugaufbau (6) aufweist, der einen das Transportgut (TG) aufnehmenden Laderaum (12) umgrenzt, umfassend folgende Arbeitsschritte:
- Anordnen eines mindestens einen Anschlagpunkt (41-44) aufweisenden, biegeschlaffen und zugbelastbaren Zurrmittels (24-27) in einer Führung, die an einer dem Laderaum (12) zugeordneten Seitenfläche (23) einer Seitenwand (L1,L2) des Nutzfahrzeugaufbaus (6) ausgebildet ist und in der das Zurrmittel (24-27) in Längsrichtung (L) der Seitenfläche (23) verschiebbar geführt ist;
- Fixieren eines Endes (28-31) des Zurrmittel (24-27) an dem Nutzfahrzeugaufbau (6);
- Anordnen des Transportguts (TG) auf der Ladefläche (5), so dass es an seiner einen Seite an einem im Laderaum (12) vorgesehenen Anschlag (9) anliegt;
- Anschlägen eines Spannmittels (47,50) an dem mindestens einen Anschlagpunkt (41-44) des Zurrmittels (24-27);
- Ausrichten des Spannmittels (47,50) an einer zum Anschlag (9) gegenüberliegenden Seite des Transportguts (TG) derart, dass beim anschließenden Verspannen des Spannmittels (47,50) eine Zugkraft auf das Zurrmittel (24-27) ausgeübt wird, die in Richtung des Anschlags (9) wirkt;
- Verspannen des Spannmittels (47,50).

## Claims

1. Method for securing the position of a transported good (TG) on a loading surface (5) of a utility vehicle (1) which has a utility vehicle body (6) erected above the loading surface (5) which delimits a loading space (12) receiving the transported good (TG), comprising the following steps:
- arranging of a lashing means (24-27), which is flexible and can withstand tensile loads, comprising at least one attachment point (41-44) in a guide which is formed on a side face (23) of a side wall (L1, L2) of the utility vehicle body (6), wherein the side face is assigned to the loading space (12), and in which the lashing means (24-27) is guided so as to be displaceable in longitudinal direction (L) of the side face (23);
- fixing one end (28-31) of the lashing means (24-27) to the utility vehicle body (6);
- arranging the transported goods (TG) on the loading surface (5) so that one side rests against a stop (9) provided in the loading space (12);
- attaching a tensioning means (47, 50) to the at least one attachment point (41-44) of the lashing means (24-27);
- aligning the tensioning means (47, 50) on a side of the transported goods (TG) opposite the stop (9) in such a way that during the subsequent tensioning of the tensioning means (47, 50) a tensile force is exerted on the lashing means (24-27), which acts in the direction of the stop (9);
- tensioning the tension means (47,50).

## Revendications

1. Procédé pour sécuriser la position d'une marchandise à transporter (TG) sur une surface de chargement (5) d'un véhicule utilitaire (1), qui a une structure de véhicule utilitaire (6) érigée au-dessus de la surface de chargement (5), qui délimite un espace de chargement (12) recevant la marchandise à transporter (TG), comprenant les étapes de travail suivantes :
- disposer un moyen d'arrimage (24-27) souple en flexion et chargeable en traction ayant au moins un point d'ancrage (41-44), dans un guidage qui est formé sur une surface latérale (23), associée à l'espace de chargement (12), d'une paroi latérale (L1, L2) de la structure (6) du véhicule utilitaire et où le moyen d'arrimage (24-27) est guidé de manière déplaçable dans la direction longitudinale (L) de la surface latérale (23) ;
- fixer une extrémité (28-31) du moyen d'arrimage (24-27) à la structure (6) du véhicule utilitaire ;
- disposer la marchandise à transporter (TG) sur la surface de chargement (5) de telle sorte qu'elle s'appuie par un de ses côtés contre une butée (9) prévue dans l'espace de chargement (12) ;
- mettre en butée un moyen de tension (47, 50) contre le au moins un point d'ancrage (41-44) du moyen d'arrimage (24-27) ;
- orienter le moyen d'arrimage (47, 50) sur un côté de la marchandise à transporter (TG) opposé à la butée (9) de telle sorte que, lors de l'arrimage consécutif du moyen de arrimage (47, 50), une force de traction est exercée sur le moyen d'arrimage (24-27), qui agit en direction de la butée (9) ;
- arrimer le moyen de l'arrimage (47,50).
